(19) Europäisches Patentamt / European Patent Office / Office européen des brevets

(11) **EP 2 910 120 A1**

(12) **EUROPEAN PATENT APPLICATION**

(43) Date of publication:
26.08.2015 Bulletin 2015/35

(21) Application number: 14382065.2

(22) Date of filing: 25.02.2014

(51) Int Cl.:
*A01K 73/02* (2006.01)          *A01K 73/06* (2006.01)
*G06Q 50/02* (2012.01)          *G07C 5/02* (2006.01)
*B63B 35/16* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Simrad Spain, S.L.**
**03570 Villajoyosa (Alicante) (ES)**

(72) Inventors:
• **Soler Martínez, Ignacio**
**03570 Villajoyosa (Alicante) (ES)**
• **Mayans Fernández, Agustín**
**03570 Villajoyosa (Alicante) (ES)**

(74) Representative: **Carlos Hernando, Borja**
**Garrigues IP, S.L.P.**
**Hermosilla, 3**
**28001 Madrid (ES)**

(54) **Method and system for controlling the fishing effort of a craft in a trawling fleet**

(57)    The present invention relates to a method and system for controlling the fishing effort of a craft in a trawling fleet, using a system connected to a recording database to measure the area that is trawled and the filtered water volume which is filtered by the net of the trawling craft only when the boat's nets are extended.

Figure 7

**Description**

Object of the Invention

The present invention relates to a method and system for controlling the fishing effort of a craft in a trawling fleet. The invention focuses on a method and system for calculating said fishing effort of a craft for the purpose of assuring the fishing resource sustainability of a maritime area, for example the Mediterranean Sea.

The field of application of the present invention is within the fishing sector, particularly focusing on the field of controlling resources, being particularly applicable to seas with small, multi-species stocks.

Background of the Invention

As is known, the European Union defines fishing effort as fishing capacity multiplied by the fishing activity, calculated on the basis of time spent in a well-defined area.

In the context of European Community fishing policy, fishing capacity has been calculated up until now on the basis of vessel characteristics. The indicators currently used are hull tonnage, which indicates the vessel's closed volume, and engine power. Based on the aforementioned concepts, fishing effort regulation in the Mediterranean Sea has sought to reduce the number of vessels; however, the result of this policy is a smaller fleet (in terms of number of vessels) but it has a greater fishing capacity.

This is because engine power in most vessels has greatly increased without the official figures reflecting this increase. To verify this fact, one can simply visit ports and see deflective otter boards with over 1,000 kg hanging from a vessel with a declared power of 300 CV, which prevents the calculations performed from being actual because with higher powers, the time of travel to the fishing ground is less and the fishing options are theoretically greater, although fuel consumption is also higher, and cost-effectiveness is negatively affected.

On the other hand, it has been found that it is not always true that a vessel with a more powerful engine will have a greater fishing effort than a vessel with a less powerful engine. That is because the time effectively dedicated to fishing with respect to the time used in navigating to reach the fishing ground has not been taken into account. With a more powerful engine, fishing gear can of course be larger in size, and in the same area, fishing could be greater than with a less powerful engine, but as already mentioned, the actual fishing time used is not being taken into account. During authorized fishing hours, there is a time dedicated to navigating and another time dedicated to fishing, and the former is not being considered when calculating the fishing effort.

Currently, controlling the fishing effort is based on the time that a craft is away from port, on the usable tonnage or capacity of the craft (measured in GTs) and on its engine power. In other words, it does not exclusively reflect the time that the craft is fishing, but rather it includes the time of travel that it takes the craft to reach the fishing ground and the time it takes to return to port.

The objective of the present invention is to therefore develop a new method and system of control to measure the fishing effort in trawl fishing that prevents such drawbacks by means of using a method of control and a system connected to a recording database.

The invention allows knowing the actual effort of a boat and accordingly of a fishing fleet, as well as the areas that withstand a high fishing effort in order to enable leaving said areas fallow.

Description of the Invention

Particularly, a first object of the invention is a system for measuring and controlling the fishing effort of trawling fleets configured as a tool that automatically measures the fishing operation, according to claim 1.

Likewise, a second object of the invention is a method for measuring and controlling the fishing effort of a particular vessel, according to claim 5.

It is first necessary to come up with a new definition of actual fishing effort in order to understand what the system object of the invention is going to measure compared to the conventional definition of fishing effort and the conventional measurement system known in the state of the art and discussed above.

As mentioned, according to current regulations, the definition of fishing effort is based on "the product resulting from multiplying the fishing capacity of a vessel, expressed in kW or GT (gross tonnage) by the activity, expressed in number of "days at sea"". "Day at sea" must be understood as any calendar day on which a vessel is away from port, regardless of the time in the course of that day that said vessel is present in an "area". The "area" must be understood as the place where the vessel fishes, i.e., the fishing ground.

The first drawback in taking the aforementioned measurement is that when the activity of fishing vessels is carefully analyzed, the actual power of the boats differs greatly from what is officially declared, so the official calculation of effort based on power will never be able to reflect the actual effort.

In addition to the discrepancy in the calculation, boats exert a variable effort on the fishing ground, depending on the size of their fishing gear. Trawl fishing is based on pulling gear (ropes, otter boards, bridles, winds, net) which travels across the sea bed. The pulling capacity of a boat depends on the propulsion thereof (engine, reduction gearing, propeller, sea conditions, etc.) and on its travel.

The formula defining the pull of a boat is:

$$T = 75 \times PS/v$$

wherein:

- T: total resistance of the gear or pulling effort of the complete fishing gear in the sea. [kg]
- PS: the effective power necessary for pulling the fishing equipment. [HP]
- v: the linear pull speed [m/s]

On the other hand, and according to Dr. Hamuro, the *effective power of the propulsion engine used to tow complete fishing gear,* referred to as PS, is calculated by means of formula:

$$PS = NHP \times C_u \times C_P \times C_s$$

wherein:

- NHP: nominal engine power. [HP]
- $C_u$: engine usage coefficient
- $C_p$: propulsion coefficient
- $C_s$: sea condition coefficient

The fact that a boat can pull a certain amount of tons does not mean that it really does. Therefore, with a 10-ton pulling capacity, a boat can work perfectly in a range of 5.5 to 9.5 tons.

With this data, it can be deduced that calculating the effort, as it is currently defined, cannot be done scientifically or fairly.

In addition to the foregoing, and as previously described, it must be taken into account that the vessel being away from port does not always mean that it is fishing in the fishing ground because that time away from port involves both traveling to the fishing ground and the return from same. Therefore, and in view of the foregoing, the present invention proposes a new system and method for controlling the fishing effort in trawling fleets.

To explain the new concept of fishing effort, two vessels, "Vessel A" and "Vessel B", will be used as an example, and said vessels have the following official data presented in the following table:

|  | VESSEL A | VESSEL B |
|---|---|---|
| Gross recorded tonnage (GRT) | 66.91 | 56.01 |
| Gross tonnage (GT) | 79.2 | 71.15 |
| Length overall (LOA) | 24.99 | 23.3 |
| Length between perpendiculars (LBP) | 19.4 | 19.94 |
| Power | 500 CV | 310 CV |

According to this data, it is clear that the first vessel has a greater fishing capacity than the second vessel. In fact, by taking into account actual powers, 900 and 700 HP, respectively, the difference is even greater.

In reality, the foregoing is true in that Vessel A has a greater pulling capacity.

When observing the measurements taken of their fishing gear by means of acoustic sensors, it can be seen that Vessel A has a net that is 3.3 meters in height and has a distance between wings of 32 m. The speed at which it pulls its gear is 2.7 knots (1.39 m/s).

In turn, Vessel B has a net that is 1.6 m in height and has a distance between wings of 28 m. Its pull speed is 3.3 knots (1.7 m/s).

In focusing on the area swept by the net of each boat per unit of time, the following results are obtained:

Vessel A: 32 m x 1.39 m/s = 44.50 $m^2$/s
Vessel B: 28 m x 1.70 m/s = 47.53 $m^2$/s

Therefore, the actual effort of the gear regarding the benthic species, i.e., those species inhabiting the sea bed, is greater per unit of time in the boat with less power.

Furthermore, the measurements of Vessel A correspond to the gear used for fishing blue and red shrimp, the fishing ground of which is, for example, 20 nautical miles from the coast. Meanwhile, the measurements of Vessel B correspond to those of the anglerfish, Norway lobster and deep-water rose shrimp fishing ground, which is located barely 6 nautical miles from the coast.

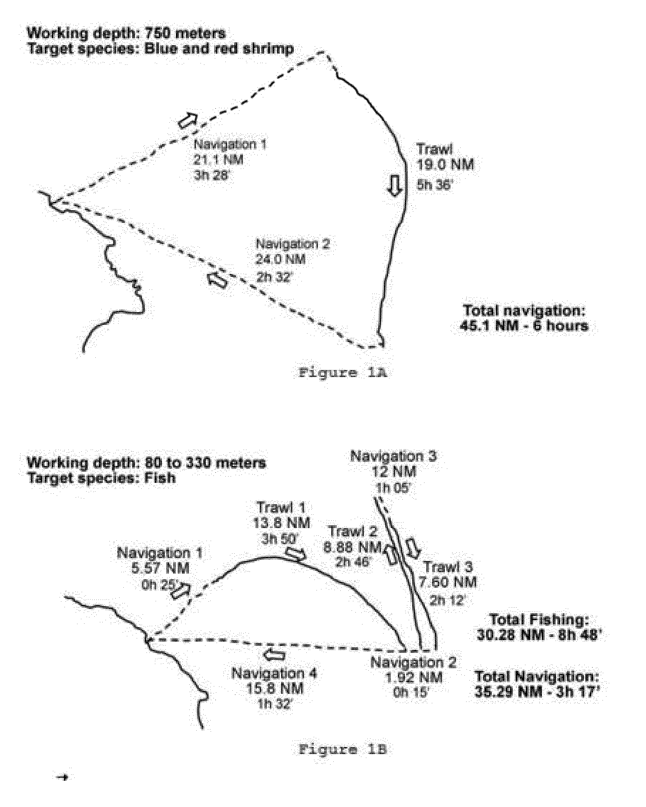

Given that the fishing activity time computed in the current fishing effort system is 12 hours, no difference whatsoever is estimated between both crafts, assuming that they fish for the same amount of time. However, the reality is shown in Figure 1, where the activity day of Vessel A is depicted in Figure 1A and that of Vessel B is depicted in Figure 1B.

Figure 1A reflects the activity day of Vessel A, with an effective pull time of 5 hours and 36 minutes, and Figure 1B reflects the activity day of Vessel B, with an effective pull time of 8 hours and 48 minutes.

In view of the foregoing, the conclusion is fairly clear, that is, the effort of Vessel B exerted on the sea bed is greater than that of Vessel A. Specifically, the figures would be:

*Area swept by Vessel A: (5 x 3600 + 36 x 60) x 44.50 = 897,120 $m^2$*
*Area swept by Vessel B: (8 x 3600 + 48 x 60) x 47.53 = 1, 505, 750 $m^2$*

In addition to the effort on the sea bed, the nets also exert an effort on the demersal species, those that are not found exclusively on or buried in the sea bed. For this reason, the net of Vessel A has a height of 3.3 m, compared to the 1.6 m height of the net used by Vessel B.

To perform a complete estimation of the fishing effort, the effort exerted by the net regarding the demersal species that are found very close to the sea bed is also calculated. A parameter referred to as filtered water volume which is filtered by the net is used for that purpose.

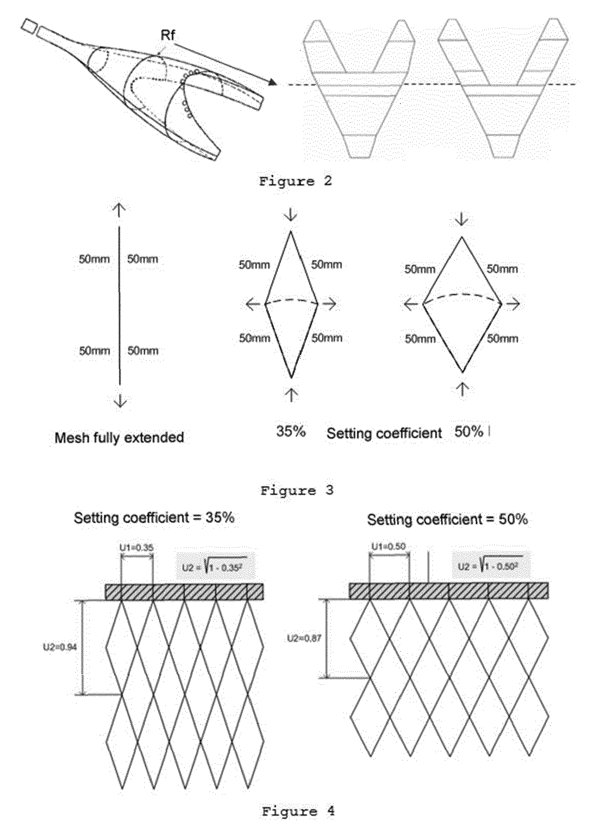

To obtain the filtered water volume which is filtered by the net, first the fishing ring of said net must be obtained. The fishing ring, Rf (see Figure 2), is defined by the number and size of meshes located at the height of the footrope or ground rope multiplied by the horizontal setting coefficient:

Rf = No. meshes x Length of mesh fully extended x Horizontal setting coefficient The horizontal setting coefficient is the percentage by which the mesh is open horizontally upon assembling the piece of netting on the float rope and ground rope. As can be seen in the sequence of Figure 3, when the mesh is fully extended, the horizontal coefficient would be zero. As the mesh opens horizontally, the horizontal coefficient increases while at the same time the vertical coefficient decreases.

With this component well comprehended, it is comprehensible that a greater setting coefficient will create a greater fishing ring and vice versa.

Figure 4 shows the effects of the setting coefficient with the mesh sewn to the footrope (U1 = Horizontal coefficient, U2 = Vertical coefficient).

Vessel A uses gear with a fishing ring of 41.64 m.
Vessel B uses gear with a fishing ring of 19.03 m.

To calculate the effort per unit of time exerted by the net on the water, the area of the fishing ring is calculated and it is multiplied by the pull speed.

The area of the fishing ring is calculated according to formula:

$$A = \pi \cdot r^2$$

Given that only the perimeter of the fishing ring is available, it is necessary to find the radius by finding the value of formula:

$$P = 2 \cdot r \cdot \pi, \text{ so } r = P/2 \cdot \pi$$

Therefore, the calculation of the area based on the perimeter will be:

$$A = \pi \cdot (P/2 \cdot \pi)^2$$

In the case of Vessel B, the effort per unit of time would be:

$$3.14 \times (19.03/2 \times 3.14)^2 \times 1.70 = 48.99 \ m^3/s$$

whereas in Vessel A it would be:

$$3.14 \times (41.64/2 \times 3.14)^2 \times 1.39 = 191.79 \ m^3/s$$

In this case, it is obvious that Vessel A is exerting greater effort on the species that are not found on the sea bed.

To find the filtered water volume which is filtered by the net of each vessel during the day, the area of the fishing ring is multiplied by the distance travelled by the net or the effort per unit of time multiplied by the pull time.

*Vessel A: (5 x 3600 + 36 x 60) x 191.79 = 3, 866, 490 m^3*
*Vessel B: (8 x 3600 + 48 x 60) x 48.99 = 1, 552, 036 m^3*

In view of the foregoing, it can be concluded that any sea bed trawl net simultaneously exerts two types of effort: one on the sea bed and the species that are found on it or partially buried in said sea bed, and another effort on the species that are found very close to the sea bed.

To calculate the effort on the first case, the measurement of the area swept by the net is used, using the distance between wings as a basis, whereas to calculate the effort of the second case, the measurement of the filtered water volume which is filtered by the net in its fishing ring is used.

It is deduced from the foregoing that the measurements of the net are essential for calculating the actual fishing effort. Said measurements will be calculated by the computer program stored in the processor of the system based on the introduction of the drawing of the net in the system by the user.

The program stores the distance between wings and the fishing ring of any of the nets for the purpose of assigning them to a category in order to subsequently calculate the actual fishing effort as indicated.

Categorization by size is established for each type of net. Each category has an amount of effort per unit of time assigned, corresponding to the mean value in that category, i.e., an amount of $m^2$ of swept surface per unit of time and an amount of $m^3$ of filtered water volume per unit of time which are pre-fixed for each net category. Therefore, each vessel recorded in the system for controlling effort must declare the nets it has for its work and will introduce the drawing of each of them.

The vessel will be authorized to use exclusively the nets that are introduced in the program.

The computer program has a user-friendly interface, in which the data necessary for incorporating the new drawing of the net can be introduced, such that the necessary measurements are obtained automatically.

The net to be used and its dimensions will be identified in the system, and it will automatically be placed in one of the existing categories (with an already predefined amount of effort per unit of time).

The system administrator may require authorization prior to the use of new nets by the boat.

The manner in which the system automatically categorizes nets is described below.

In any case, any other method for categorizing nets which the system administrator decides on can be incorporated in the program and applied to calculating the actual fishing effort, such as using a catalogue of nets already included in the actual program of the system, for example.

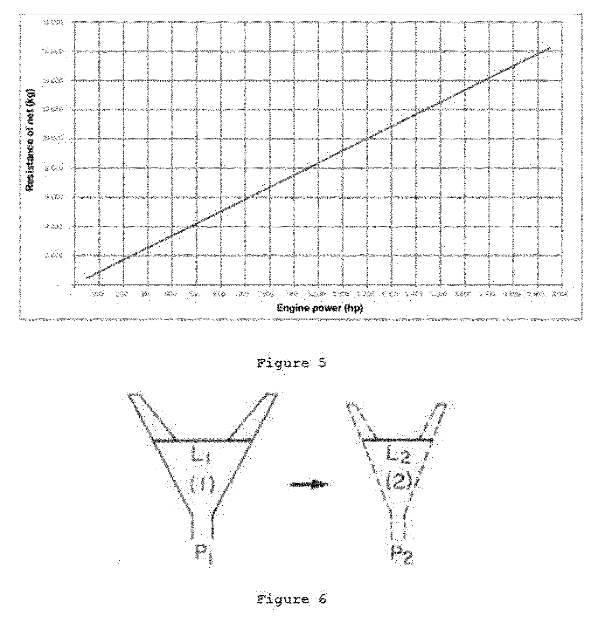

The process of categorizing nets is carried out assuming that a boat with 500 hp can pull 6,000 kg (which includes all the gear; net, ropes, deflective otter boards...etc.) and taking the percentage of resistance of the net in 70% of the total gear (D.A. Wileman - Project "Oilfish" Investigation of the resistance of trawl gear, DFTI. 1984) in order to scale the pulling of a net that can be done per unit of power. Figure 5 shows a table with the scaling of the pulling of a net per unit of power. The similarity coefficient has been used to scale the nets (P.Y. Drèmiere, Fisherman's Workbook, Ifremer/F.A.O. 1988). The pull (of the boat) must be understood as the capacity to move a resistance (the net).

A similarity equation according to the following definition is used to know the scaling factor:

*"Trawl net (1) used with the trawler that has a power $P_1$(hp) is known; if the power of our boat is $P_2$(hp), to obtain the dimensions of the net (2) the dimensions of length and height of each part of (1) are multiplied by $\sqrt{\dfrac{P2}{P1}}$"*

Using the graph in Figure 6 as a reference, 19 categories of nets have been established depending on their resistance. Therefore, category 1 will comprise the theoretical pulling of a boat between 50 hp and 149 hp, category 2 will comprise the theoretical pulling of a boat between 150 hp and 249 hp, and so on and so forth up to a maximum power of 1,949 hp.

The computer program or software of the system will allow introducing the drawing of the net in a simple and intuitive manner. To that end, the following information about the net must be available:

- Length of the float rope and ground rope
- Horizontal setting coefficient in the float rope and ground rope
- Dimensions for each piece of netting of the net

    ○ Length of the mesh fully extended (ME)
    ○ Diameter of the yarn
    ○ Height in meshes of the piece of netting
    ○ Number of meshes on the upper edge of the piece of netting ○ Number of meshes on the lower edge of the piece of netting
    ○ Cut applied on each side of the piece of netting

Once the drawing of the net is introduced in the computer program stored in the processor of the system of the craft, it will calculate its resistance according to formula:

$$R_{net} = [8 \times a \times b \times v^2 \times d/L] \times (1+\sin \alpha)$$

wherein

$R_{net}$= Resistance of the net (kg).
a= Fishing ring at the height of the mouth in the ground rope.

$$a = [\textstyle\sum(N\# \times ME)] \times Ch \text{ (m)}.$$

where N# is the number of meshes, ME is the length of the mesh fully extended (in meters) and Ch is the horizontal setting coefficient of the mesh. All this is measured at the height of the mouth in the ground rope. A net can also be made up in fishing ring thereof of several sections with meshes of different lengths, so it is necessary to perform this operation for each of them, adding up the total.

b= *Length of the net fully extended, without including the cod-end* (m)

$$b= \sum_{i=1}^{n}(N\#VPSi * MEi)$$

where N#VPSi...n = Number of meshes from the upper plane 1 to the upper plane n of the net in the longitudinal direction and MEi (in meters) the length of the mesh fully extended in each of the upper planes (from 1 to n).
v= Pull speed (kn), using 3 knots as the standard speed.
d= Average diameter of the yarns making up the net (mm).
L= Average length of the meshes of all the pieces of netting making up the net (mm).
Sin $\alpha$= Sine of the angle offered by the piece of netting of the square to the attack. The angle $\alpha$ will be used as a standard at 10°.

At this point, the system will have calculated the resistance of the net, the fishing ring and the length of the float rope.

The net will be assigned to one of the 19 categories according to the resistance of said net, in order to calculate, again using the similarity equation, the fishing ring and the length of footrope proportional to the mean resistance of said category.

| Category | Minimum R. | Mean R. | Maximum R. |
|---|---|---|---|
| 1 | 420 | 839 | 1,257 |
| 2 | 1,258 | 1,677 | 2,096 |
| 3 | 2,097 | 2,516 | 2,934 |
| 4 | 2,935 | 3,354 | 3,773 |
| 5 | 3,774 | 4,200 | 4,611 |
| 6 | 4,612 | 5,031 | 5,450 |
| 7 | 5,451 | 5,870 | 6,288 |
| 8 | 6,289 | 6,708 | 7,126 |
| 9 | 7,127 | 7,547 | 7,965 |
| 10 | 7,966 | 8,385 | 8,803 |
| 11 | 8,804 | 9,224 | 9,642 |
| 12 | 9,643 | 10,062 | 10,480 |
| 13 | 10,481 | 10,901 | 11,311 |
| 14 | 11,312 | 11,739 | 12,157 |
| 15 | 12,158 | 12,577 | 12,996 |
| 16 | 12,997 | 13,416 | 13,834 |
| 17 | 13,835 | 14,254 | 14,673 |
| 18 | 14,674 | 15,093 | 15,511 |
| 19 | 15,512 | 15,931 | 15,175 |

For example:

A craft X has two nets, one of them with a resistance of 5,116 kg, a fishing ring of 49.53 m and a length of float rope of 87.60 m. This net of X fits in category 6 (resistances of 4,612 kg to 5,442 kg), the mean resistance of category 6 being 5,031 kg, so using the similarity equation the following is obtained:

$$\text{Scaling factor} = \sqrt{5031/5116} = 0.991658$$

Therefore, to calculate the fishing ring and the length of float rope to be taken into account for calculating the effort, the following is true:

$$Rf_{final} = 0.991658 \cdot 49.53 \text{ m} = 49.12 \text{ m}$$

$$Lfr_{final} = 0.991658 \cdot 87.60 \text{ m} = 86.87 \text{ m}$$

The second net of X has a resistance of 4,757 kg, a fishing ring of 53.78 m and a length of float rope of 90.50 m. This net of X also fits in category 6 (resistances of 4,612 kg to 5,442 kg), the mean resistance of category 6 likewise being 5,031 kg, so again using the similarity equation the following is obtained:

$$\text{Scaling factor} = \sqrt{4757/5031} = 0.972388$$

Therefore, to calculate the fishing ring and the length of float rope to be taken into account for calculating the effort, the following is true:

$$Rf_{final} = 0.972388 \cdot 53.78\ m = 52.30\ m$$

$$Lfr_{final} = 0.972388 \cdot 90.50\ m = 88.00\ m$$

Establishing categories with margins determined by the resistance will allow avoiding discrepancies in calculating the effort due to minor variations in the size of the meshes due to use, or in constructing the net due to its cuts.

In view of the foregoing, the system and method object of the present invention allow a vessel, or a fleet formed by several vessels, to control the actual fishing effort exerted, which allows in addition to the calculation thereof, controlling that users do not lie to the system due to the control devices incorporated in the system itself.

The system object of the present invention therefore generally comprises:

- A processor,
- Locating means for locating a craft, which means are connected with the processor,
- Control means for controlling the situation of the net rope, which means are connected with the processor, and
- Control means for controlling the dimensions of the net when deployed, which means are connected with the processor.

More specifically, said system comprises:

- a control processor installed in a craft or vessel with means of storing the dimensions and characteristics of the trawl nets,
- a GPS device, as the locating means for locating the craft, connected with the processor to provide the processor with the speed and position of the craft or vessel,
- at least one hoist or winch for winding and unwinding the ropes of the trawl nets of the craft, with at least one sensor, as the control means for controlling the situation of the net rope, connected with the processor for providing said processor with information relating to the unwound meters of net rope and the moment in which said meters are unwound or deployed and collected or wound,
- sensors, as control means for controlling the dimensions of the net when deployed, installed in the wings of the net and connected with the processor to measure the distance between wings, and
- sensors measuring the height of the trawl nets.

The system of the present invention for measuring the fishing effort comprises one or several processors for recording data and for the graphic user interface. The system is ideally proposed with one dedicated processor for recording data (black box) and another one for working with the graphic user interface software, but both tasks can be done in a single processor if it is considered appropriate.

The processor may or may not include a modem, and it is connected with a GPS device providing the processor with the position and speed of the boat at all times; sensors in the hoist or winch in the boat, also connected with the processor such that said processor records when the winch releases and collects the net ropes as well as to measure the length of said ropes; and sensors measuring the height of the net and the distance between the wings of said net.

As an alternative to the use of sensors to measure the distance between the wings of the net, sensors located in the deflective otter boards can be used and the distance between otter boards can be measured, or the length of rope that is cast (obtained by acoustic sensors in the otter boards, by sensors in the hoists or by manual introduction by onboard crew) and the depth could be used.

The processor is responsible for gathering information of each of the components and for periodically storing it at certain intervals which can be variable. Said information can either be stored in a memory unit, be sent by means of a modem to a data collection center, or both.

By means of the selection of the user, the system assigns one of the nets introduced in the program to the fishing activity to be performed and automatically discriminates between effective fishing periods and navigation periods by means of the sensors described above.

Furthermore, it is verified by means of the sensors for measuring the height of the net and the distance between the wings of the net and/or the deflective otter boards of the net that the net selected by the user corresponds to that introduced in the system, such that if the user incorporates false data, the system will detect it.

Finally, the effort that is exerted will be obtained automatically by means of the parameters of effective fishing time, speed and type of net selected.

Therefore, unlike conventional methods, which calculate the fishing effort according to the navigation time, tonnage and rated power of the vessel, by means of categorizing nets and different sensors and devices, the present invention detects when the winches are operating, in addition to the navigation data (position and speed) received via GPS, to enable obtaining all the necessary data and calculating the fishing effort exerted.

Said data is captured by the processor and stored in a memory unit or sent by means of a modem so that it can subsequently be included in a database to enable calculating the actual fishing effort of a craft or of a fleet (insofar as each boat incorporates a system) in a specific area and period.

The data could later be analyzed by any computer equipped with the suitable computer program or software, which can be specific for such purpose, which allows obtaining the amount of fishing effort in a period of time and showing the route followed by each vessel, as well as the place where the fishing activity was carried out.

Therefore, and if the preceding information is available from the mentioned devices, the time of the vessel away from port, the engine power and the tonnage of the vessel are no longer determining data for knowing the fishing effort, being able to configure an actual fishing effort quota in the fishing ground for each vessel or for a fleet as a whole. Therefore, if a fishing period, for example five days a week, thirty-seven weeks a year, and an actual fishing effort quota for each craft are established, the crafts could manage their own quota as they consider most appropriate throughout the established period.

This system also allows managing the actual fishing effort quota on a fleet level. The quota assigned to the fleet can therefore be transferred from certain crafts to others. Said information, combined with a daily fishing log, will allow accurately knowing the areas of the fishing ground where excessive effort is being exerted due to the decrease in catches therein. Biological recovery periods are established in these areas in question without needing to close the entire fishing ground, with the economic cost this entails.

In other words, the invention fulfills the objectives that are sought, which are: knowing the actual fishing effort exerted in a fishing ground or in an area thereof by a vessel or a fleet, while at the same time it allows knowing which areas of a fishing ground have withstood an excessive effort, which makes it advisable to leave said areas fallow. Finally, it must be mentioned that even though the measurement of the filtered water volume and the area swept by the net is somewhat known, the system and method object of this invention use said type of measurement for generating a record of the volume and/or area swept, with the particularity that it is geographically located, is transmitted to be added to a database and is associated with a system for managing area and/or volume quotas defined as actual fishing effort.

The method object of the invention for controlling and measuring the fishing effort comprises the following main steps:

- Assigning a fishing effort quota (amount of swept surface and filtered water volume) to at least one craft during a specific time period,
- Taking an actual measurement of the fishing effort of at least one craft and storing the data obtained in the measurement, and
- Collecting and systematizing the information obtained after taking an actual measurement to determine when at least one craft has used up its fishing effort quota.

With respect to the first step of assigning a fishing effort quota to the craft or vessel, an administrator (usually the Public Administration) will be responsible for assigning the annual actual fishing effort quota of both the area swept by the net and of the filtered water volume which is filtered by said net for each vessel recorded in the system.

The actual fishing effort quota assigned to each vessel, will be the basis from which the daily fishing effort will be subtracted. Consumption of the assigned effort quota will vary depending on the net used. In the software of the processor in the craft bridge, the operator or user could see the effort that he/she is consuming at all times, as well as that which is left over both in volume and in area.

Once the limit of one of the two assigned effort quotas (area or volume) has been reached, the boat must cease to operate until a new quota is assigned.

Upon obtaining the actual effort, the limitation of hours can be eliminated, allowing the vessels to have a flexible schedule that is better adapted to daylight hours or good weather where operating is cost-effective. Many navigation hours can thus be saved, so operating costs will be lower.

With respect to the step of taking an actual measurement of the fishing effort, this in turn involves the following sub-steps:

- Acquiring and storing in the processor technical data about the fishing gear of at least one craft and determining the distance between wings as well as the fishing ring,
- Assigning a category to the fishing gear, as described above,
- Recording the position and speed of the craft in the processor thereof from the time it leaves a port until it returns to said port based on the information transmitted to the processor by a GPS device,
- The processor recording the moment in time when the winch is activated to deploy the net rope as well as the length of said rope when deployed based on the information transmitted by the sensor arranged in the winch or winches,
- Recording the vertical distance of the mouth of the net and horizontal distance of the opening between the wings,
- Recording in the processor the collection of the net ropes based on the information collected by the winch, once the fishing time has expired,
- Calculating the fishing effort depending on the category of the fishing gear, the fishing time and speed, i.e., calculating the swept sea bed surface and the filtered water volume, and
- Recording data about the swept sea bed surface and filtered water volume.

In the sub-step of acquiring and storing in the processor technical data about the fishing gear of the craft, the technical data about the fishing gear, i.e., the drawing of the net is collected for the purpose of performing the following calculations:

1- Distance between wings of the net

2- Length of the fishing ring

As an alternative to the preceding calculations and as verification elements, the vertical distance of the mouth of the net and the horizontal separating distance of the wings are calculated based on the information provided by measuring means, usually sensors, connected with the processor of the craft, and arranged in the net and in the wings, or by means of the alternative means discussed above.

In the sub-step of calculating the fishing effort, this calculation is performed on the basis of two parameters, the swept sea bed surface and the filtered water volume calculated as indicated below:

- The swept sea bed surface is the result of: Distance between wings of the net (horizontal opening)* speed * time
- The filtered water volume is the result of: Area of the mouth of the net (horizontal opening of the net * ½ vertical opening of the net$^2$ * $\Pi$) * speed * time

where the area of the mouth of the net is:

$$A = \pi \cdot (\text{Length of the fishing ring}/2 \cdot \pi)^2$$

Then data about the swept sea bed surface and about the filtered water volume in a period of time accumulates and is subtracted from the maximum effort quota assigned.

With respect to the step of collecting and systematizing the information, it is possible to manage the global effort of a fishing fleet in a certain fishing ground. This can be done by means of splitting up the fishing ground into smaller areas to which a fishing effort quota is also assigned, such that those areas where said quota is reached can be left fallow.

For example, the fishing ground will be referenced on a grid with a resolution of 1 minute of latitude x 1 minute of longitude, such that it can be treated using L/L coordinates. At the start of the haul, the present invention will begin to assign to each cell the effort exerted on it.

Description of the Drawings

To complement the description of the invention and to aid in understanding the features thereof, a set of drawings is attached to the present specification as an integral part thereof, in which the following is depicted with an illustrative and non-limiting character:

Figure number 1A shows an activity graph of a VESSEL A.
Figure number 1 B shows an activity graph of a VESSEL B.
Figure 2 shows the depiction of a net in which the "fishing ring", Rf, is indicated.
Figure 3 shows a sequence for opening a mesh or net.

Figure 4 shows the setting coefficient effects in a net.
Figure 5 shows a graph with the scaling of pulling of a net per unit of power.
Figure 6 shows a graph related to the similarity equation.

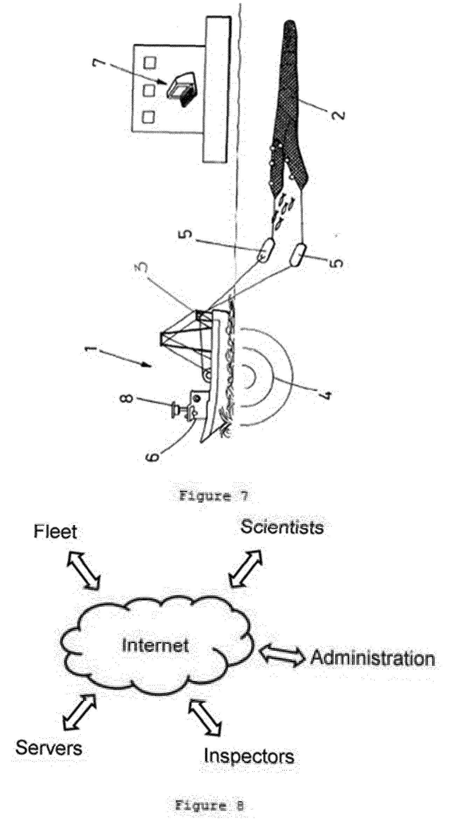

Figure 7 shows a schematic drawing of a trawling vessel with the elements of the system of the present invention.
Figure 8 schematically shows the system object of the present invention.

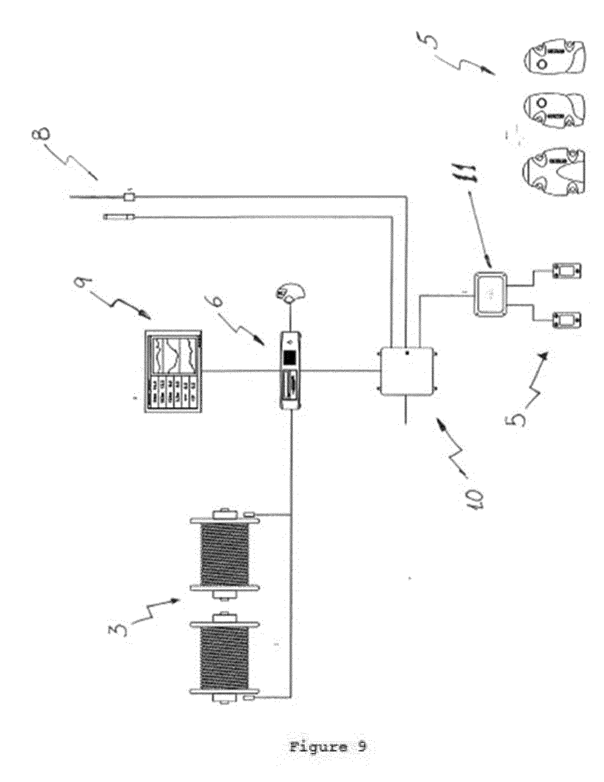

Figure 9 schematically shows the system to be installed in a vessel.

Preferred Embodiment of the Invention

The object of the present invention, which is a method and system for measuring and controlling the fishing effort of trawling fleets proposed by the invention, is to calculate the swept sea bed surface and the filtered water volume which is filtered by the net 2 of the trawling vessel 1 regardless of its power/HP and tonnage/GT, for which purpose a system of control is included with a set of sensors 5 and devices measuring the following data during the fishing period:

- The position and speed of the vessel by means of a GPS system or the like
- The activation of the hoist or winch 3 for casting and for heaving
- The aperture of the wings of the net 5
- The height of the net 2

Additionally, and as a common element in crafts, it is possible that this includes an echo sounder 4, although its presence in the craft does not affect the present invention. All the measurements taken by the different sensors are stored in a control automaton or processor 6 that the vessel 1 is equipped with, such that the swept sea bed surface and the filtered water volume which is filtered by the net 2 are calculated only when the boat is with the nets 2 extended, and enabling in this manner the calculation of the actual effort, the fishing time, and the fishing site, among others. Before starting to fish, the user must introduce or choose in the processor the type of net 2 to be used.

The information acquired by the sensors or control means is collected in a receiving device (11) connected with a recording unit (10) in turn connected with the processor (6) located in the bridge of the craft (1). Said processor is connected with a monitor (9) allowing the user to control the measurements that are taken.

To manage the acquired information in a practical manner, the nets 2 are categorized depending on their size, specifically on the maximum aperture capacity of the net both width-wise and height-wise, and a fishing effort per unit of time would be assigned to each net category. A boat 1 using a net 2 included in a certain category is thus assigned a specific fishing effort depending on the hours it has been fishing, which information is obtained from the system object of the invention.

Likewise, and due to the features of the system, in the event that a boat 1 makes any change in its nets 2 with respect to the net 2 that is declared and introduced in the processor 6 that allows it to extend them more, the change will be detected and communicated with the possibility of instituting disciplinary proceedings.

Each vessel 1 will have a system of sensors in the trawling hoists or winches 3 which will detect when fishing operations start and end. Other methods of verification, such as the speed or the information of the acoustic sensors 5 placed in the net 2, will be used. To control the fishing area of the different crafts, at the start of the haul, the effort exerted on a cell into which the fishing ground has been split up will begin to be assigned. To that end the following must be done:

• The distance between wings is multiplied by the distance travelled, for calculating the swept area.
• The area of the fishing ring is multiplied by the distance travelled, for calculating the filtered water volume.

At the same time, the system will verify by means of the acoustic sensors 5, that the net 2 that is declared in the system is the one that is being used.

To verify the dimensions of the net 2, the computer program or software of the vessel 1 will use at least the measurements of the height of the mouth and the distance between wings or between otter boards and will verify that they correspond to the net 2 that is declared.

Upon reaching land, the data collected by the control automaton or processor 6 of the vessel 1 are downloaded into a recording database 7 located on land, for example in a central unit, to be controlled together with the remaining vessels. The data collected by the processor of the craft are either transmitted by means of a modem and wireless communication means 8 to said recording database 7 on land, or they are recorded in a memory unit from the processor itself and subsequently recorded in the recording database.

Depending on the result of the verification of the net by the sensors, the invention will proceed as follows:

- If the sensors 5 correctly verify the net, a "valid" status will be communicated to the control center, together with the summarized effort data, in which the effort is distributed for each cell,

- If there is a discrepancy in the measurements obtained by the sensors 5 and the net 2 that is declared by the operator, the system will report a "suspicious" status to the control center, together with the detailed telemetry of the haul (a piece of data every 60 seconds) in order to manually review and decide if the discrepancy is real or if it a system malfunction,
- If the discrepancy is proven to be real, it will be communicated to the area inspector in order to start the corresponding in situ inspection,
- If a malfunction in the system is observed, the maintenance center must be notified in order to immediately start the corrective action,
- If the recording system does not detect that the software of the vessel is active (computer shut off), it will send a "disconnected" status to the control center, together with the summarized effort data using the gear with the highest effort assignment available in the vessel. Upon receiving the "disconnected" status, communication with the operator will be established to find out the reason, starting the corrective action in case of failure.

Since the system of the vessel 1 has two-way communication with the control center, temporary closure areas could be established in a flexible manner. The closure areas will be clearly indicated in the control map of the vessel 1, which can be consulted on the monitor 9.

In the event that a vessel trawls in an area with an activated closure, the control center will immediately and automatically institute a disciplinary proceeding, showing on the monitor 9 of the system of the vessel 1 the incident and offering the possibility of justifying or appealing in established time.

The system of the vessel 1 will have the option of being able to record catches in each haul, thus assigning catches to a specific geographical location.

The operator of the control center 7 will be able to see the fishing effort with any type of options and filters (dates, vessels, ports, etc.) in addition to being able to obtain any type of statistical reports based on the recorded information.

The data of the system of control will be contained in a secure server with automatic backup. In response to the possibility of the main system collapsing, the backup server would automatically take control.

The recorded data could be distributed to the scientific sector and even to operators, if the administration desires this. Of course the level of information received by each user will be regulated by the same administration.

The system for controlling data is made up of a subsystem 6 installed onboard, a main secure data server 7 and a backup data server. The data servers will be in different locations and will also have all the security measures required by the administration.

The users of the system for controlling data will access the servers through Ethernet or internet by means of a secure connection, by means of password - token (electronic signature). Different user levels with rights restricted to each type will be defined. Inspectors will have an application for iOS or Android where they will be able to receive inspection notifications in detailed form. Said application will manage the inspection process, allowing graphic and written documentation of the records that may be generated during said inspection.

The system object of the invention installed in the vessel will preferably comprise a recording unit 10, or "black box", which will be activated in an autonomous manner and will not require any handling. The recording unit 10 will be responsible for detecting the start/end of the fishing operations (by means of sensors in the hoists or winches 3), will have a connection to its own GPS and an external GPS, and will communicate with the processor 11 of the acoustic sensors 5 of the net 2.

The recording unit 10 will have a connection to internet by means of Wifi, 3G or any other data communication means existing onboard.

The system will be able to transmit the data in real time, although for reasons of economy, this is preferably done in a differed manner once the boat 1 reaches the port. The processor 10 of the acoustic sensors 5 works with one or two hydrophones 5 placed in the hull of the craft. In the event that the boat already has a system of sensors, existing hydrophone/hydrophones (compatible with Scanmar, Simrad and Marport systems) could be used.

This will be the equipment communicating with the user or captain of the vessel 1, so there is at least one screen or monitor 9 the user or captain can use. The system installed in the vessel 1 may have, if needed, a single processor 6 for performing the functions described above.

In addition to the basic data necessary for managing effort, the system of the vessel will be prepared to include another type of compatible sensors, such as: fuel consumption measuring devices, engine rpm counter, echo sounders, meteorological stations, etc.

The method of control object of the present invention, which is implemented with the preceding system, particularly comprises:

- Assigning a fishing effort quota (amount of swept surface and filtered water volume) to at least one craft during a specific time period,

- Taking an actual measurement of the fishing effort of at least one craft and storing the data obtained in the measurement, and
- Collecting and systematizing the information obtained after taking an actual measurement to determine when at least one craft has used up its fishing effort quota.

With respect to the step of taking an actual measurement of the fishing effort, this in turn involves the following sub-steps:

- Acquiring and storing in the processor 6 technical data about the fishing gear or net 2 of at least one craft 1 and determining the distance between wings as well as the fishing ring,
- Assigning a category to the fishing gear 2 as described above,
- Recording the position and speed of the craft in the processor 6 thereof from the time it leaves a port until it returns to said port based on the information transmitted to the processor by a GPS device,
- The processor 6 recording the moment in time when the winch 3 is activated to deploy the net rope 2 as well as the length of said rope when deployed based on the information transmitted by the sensor arranged in the winch or winches 3,
- Recording the vertical distance of the mouth of the net 2 and horizontal distance of the opening between the wings,
- Recording in the processor the collection of the net ropes 2 based on the information collected by the winch 3, once the fishing time has expired,
- Calculating the fishing effort depending on the category of the fishing gear, the fishing time and speed, i.e., calculating the swept sea bed surface and the filtered water volume, and
- Recording data about the swept sea bed surface and filtered water volume.

The assignment of the actual fishing effort of a certain user in a specific period of time is allowed by means of the preceding system and method.

**Claims**

1. A system for controlling the fishing effort in trawling fleets, **characterized in that** it comprises:

    - A processor installed in a vessel or craft,
    - Locating means for locating a craft, which means are connected with the processor,
    - Control means for controlling the situation of the net rope, which means are connected with the processor, and
    - Control means for controlling the dimensions of the net when deployed, which means are connected with the processor.

2. The system according to claim 1, **characterized in that**:

    - the control processor installed in a craft or vessel comprises means for storing the drawings with the dimensions and characteristics of the trawl nets,
    - the locating means comprise a GPS device connected with the processor to provide the processor with the speed and position of the craft or vessel,
    - it comprises at least one hoist or winch for winding and unwinding the ropes of the trawl nets of the craft, where the control means for controlling the situation of the net rope consist of at least one sensor connected with the processor to provide the processor with information relating to the unwound meters of net rope and the moment in which they are unwound or deployed and collected or wound,
    - the control means for controlling the dimensions of the net when deployed are sensors installed in the wings of the net and connected with the processor to measure the distance between wings, and sensors measuring the height of the trawl nets.

3. The system according to claim 1, **characterized in that** it comprises a modem connected with the processor.

4. The system according to claim 1, **characterized in that** the control means for controlling the dimensions of the net comprise sensors in the wings and in the net to measure the distance between the otter boards and the height of the net respectively or their measuring alternatives by means of sensors for measuring the distance between the deflective otter boards or by knowing the length of rope that is cast and the depth.

5. A method for controlling the fishing effort in trawling fleets in a certain fishing ground by means of a system according to claims 1 to 3, **characterized in that** it comprises the steps of:

- Assigning a fishing effort quota to at least one craft during a specific time period,
- Taking an actual measurement of the fishing effort of at least one craft and storing the data obtained in the measurement, and
- Collecting and systematizing the information obtained after taking the actual measurement to determine when at least one craft has used up its fishing effort quota.

6. The method according to claim 4, **characterized in that** taking an actual measurement of the fishing effort comprises the steps of:

- Acquiring and storing in the processor technical data about the fishing gear of at least one craft and determining the distance between wings as well as the fishing ring,
- Assigning a category to the fishing gear as described above,
- Recording the position and speed of the craft in the processor thereof from the time it leaves a port until it returns to said port based on the information transmitted to the processor by a GPS device,
- The processor recording the moment in time when the winch is activated to deploy the net rope as well as the length of said deployed rope based on the information transmitted by the sensor arranged in the winch or winches,
- Recording the vertical distance of the mouth of the net and the horizontal distance of the opening between the deflective otter boards or wings,
- Recording in the processor the collection of the net ropes based on the information collected by the winch, once the fishing time has expired,
- Calculating the fishing effort depending on the category of the fishing gear, the fishing time and speed, i.e., calculating the swept sea bed surface and the filtered water volume, and
- Recording data about the swept sea bed surface and filtered water volume.

Working depth: 750 meters
Target species: Blue and red shrimp

Navigation 1
21.1 NM
3h 28'

Trawl
19.0 NM
5h 36'

Navigation 2
24.0 NM
2h 32'

Total navigation:
45.1 NM - 6 hours

Figure 1A

Working depth: 80 to 330 meters
Target species: Fish

Navigation 3
12 NM
1h 05'

Trawl 1
13.8 NM
3h 50'

Trawl 2
8.88 NM
2h 46'

Trawl 3
7.60 NM
2h 12'

Navigation 1
5.57 NM
0h 25'

Navigation 4
15.8 NM
1h 32'

Navigation 2
1.92 NM
0h 15'

Total Fishing:
30.28 NM - 8h 48'

Total Navigation:
35.29 NM - 3h 17'

Figure 1B

Figure 2

Mesh fully extended    35%    Setting coefficient    50%

Figure 3

Setting coefficient = 35%          Setting coefficient = 50%

Figure 4

Figure 5

Figure 6

Figure 7

Fleet

Scientists

Internet

Administration

Servers

Inspectors

Figure 8

Figure 9

Europäisches
Patentamt

European
Patent Office

Office européen
des brevets

# EUROPEAN SEARCH REPORT

Application Number

EP 14 38 2065

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | "Simrad ITI Trawl monitoring system", <br><br> 1 October 2009 (2009-10-01), XP055136240, Retrieved from the Internet: URL:http://www.simrad.com/www/01/NOKBG0397 .nsf/AllWeb/C69B7378FDC38854C12573F600292C B1/$file/340165aa_iti_data_sheet_english.p df?OpenElement <br> [retrieved on 2014-08-25] <br> * the whole document * | 1-6 | INV. <br> A01K73/02 <br> A01K73/06 <br> G06Q50/02 <br> G07C5/02 <br> B63B35/16 |
| X | "iSYM TRAWL CONTROL", <br><br> 12 March 2007 (2007-03-12), XP055136362, Retrieved from the Internet: URL:http://www.scantrol.no/wp-content/uplo ads/2012/09/iSYM_Trawl_Control_FullSpec1.p df <br> [retrieved on 2014-08-25] <br> * the whole document * | 1-6 | |
| X | "NEAMAP Field Methods", <br><br> 1 February 2014 (2014-02-01), XP055136840, Retrieved from the Internet: URL:https://web.archive.org/web/2014020101 0737/http://www.vims.edu/research/departme nts/fisheries/programs/multispecies_fisher ies_research/field_methods/neamap/index.ph p <br> [retrieved on 2014-08-27] <br> * the whole document * | 1-6 | TECHNICAL FIELDS SEARCHED (IPC) <br><br> A01K <br> G06Q <br> G07C <br> B63B |
| X | WO 2009/103840 A1 (GINARD ACOSTA CRISTOBAL [ES]; AMER BINIMELIS MARGARITA [ES]) 27 August 2009 (2009-08-27) <br> * the whole document * | 1-6 | |

-/--

The present search report has been drawn up for all claims

| Place of search | Date of completion of the search | Examiner |
|---|---|---|
| Munich | 4 September 2014 | Stratford, Colin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 14 38 2065

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2005 046034 A (NICHIMO KK) 24 February 2005 (2005-02-24) * paragraph [0031] - paragraph [0038]; figure 1 * | 1-6 | |

TECHNICAL FIELDS
SEARCHED       (IPC)

The present search report has been drawn up for all claims

| Place of search | Date of completion of the search | Examiner |
|---|---|---|
| Munich | 4 September 2014 | Stratford, Colin |

EPO FORM 1503 03.82 (P04C01)

**ANNEX TO THE EUROPEAN SEARCH REPORT
ON EUROPEAN PATENT APPLICATION NO.**                    EP 14 38 2065

This annex lists the patent family members relating to the patent documents cited in the above-mentioned European search report.
The members are as contained in the European Patent Office EDP file on
The European Patent Office is in no way liable for these particulars which are merely given for the purpose of information.

04-09-2014

| Patent document cited in search report | Publication date | Patent family member(s) | Publication date |
|---|---|---|---|
| WO 2009103840 A1 | 27-08-2009 | ES 2324930 A1<br>WO 2009103840 A1 | 19-08-2009<br>27-08-2009 |
| JP 2005046034 A | 24-02-2005 | JP 3840467 B2<br>JP 2005046034 A | 01-11-2006<br>24-02-2005 |

For more details about this annex : see Official Journal of the European Patent Office, No. 12/82